# EUROPEAN PATENT SPECIFICATION

(11) **EP 1 588 033 B1**
(45) Date of publication and mention of the grant of the patent: **25.06.2008**
(21) Application number: 03814623.9
(22) Date of filing: 17.11.2003
(51) Int. Cl.: F01N 3/28, B01D 53/94

(54) **POLLUTION CONTROL DEVICE AND MAT FOR MOUNTING A POLLUTION CONTROL ELEMENT**
SCHADSTOFFKONTROLLVORRICHTUNG UND MATTE ZUR BEFESTIGUNG EINES SCHADSTOFFKONTROLLELEMENTS
DISPOSITIF DE CONTROLE DE LA POLLUTION ET NAPPE PERMETTANT LE MONTAGE D'UN ELEMENT DE CONTROLE DE LA POLLUTION

(30) Priority: 26.12.2002 JP 2002377557
(43) Date of publication of application: 26.10.2005
(73) Proprietor: 3M Innovative Properties Company, St. Paul, MN 55133-3427 (US)
(72) Inventor: WATANABE, Toshiyuki,, Atsugi, Kanagawa 243-0037 (JP); MIYASAKA, Muneki, Sagamihara, Kanagawa 229-1185 (JP)
(74) Representative: Vossius & Partner
(86) International application number: PCT/US2003/036478
(87) International publication number: WO 2004/061279

(56) References cited:
- WO-A-03/050397
- US-A- 5 094 074
- US-B1- 6 224 835
- PATENT ABSTRACTS OF JAPAN vol. 1999, no. 01, 29 January 1999 (1999-01-29) -& JP 10 288032 A (MITSUBISHI CHEM CORP), 27 October 1998 (1998-10-27) -& DATABASE WPI Week 199902 Derwent Publications Ltd., London, GB; AN 1999-018671 XP002276900 & JP 10 288032 A
- PATENT ABSTRACTS OF JAPAN vol. 010, no. 033 (M-452), 8 February 1986 (1986-02-08) & JP 60 187712 A (NISSAN JIDOSHA KK), 25 September 1985 (1985-09-25)

## Description

### Field of the Invention

The present invention relates to pollution control devices (e.g., catalytic converters, diesel particulate filters, etc.), to mats for mounting pollution control elements in such devices and, in particular, to catalytic converters used in exhaust gas purification devices and, more particularly, to a mat for mounting a catalyst support in a catalytic converter housing.

### Background

Catalytic converters used in the exhaust gas purification devices of automobile and diesel engines normally contain a catalyst support composed of a monolith having a so-called "honeycomb structure" in which through holes are arranged in the shape of honeycombs, in a metal housing. This monolith is loaded with a catalyst such as a precious metal, and purifies exhaust gas by oxidizing carbon monoxide and hydrocarbons and reducing nitrogen oxides. This monolith catalyst support is formed from a metal or ceramic material. In order to receive the catalyst support in a metal housing, a mat for mounting the catalyst support (catalyst support mounting material) composed of alumina-silica-based fibers or other ceramic fibers is arranged between the metal housing and catalyst support, and the catalyst support is held and protected from damage.

However, the coefficient of thermal expansion of ceramic catalyst support is typically nearly a power of ten smaller than the coefficient of thermal expansion of the metal housing. Although catalytic converters are normally exposed to high temperatures of several hundred degrees, under such high temperatures, the thermal expansion of the metal housing exceeds the thermal expansion of the ceramic catalyst support due to the difference in the coefficients of thermal expansion between the metal housing and ceramic catalyst support. As a result, gaps expand between the metal housing and catalyst support resulting in a decrease in the holding strength of the catalyst support, leading to problems such as the occurrence of rattling in the catalyst support.

Therefore, it has been proposed to prevent a decrease of the holding strength of the catalyst support when gaps expand between the metal housing and catalyst support by containing an expanding agent in the mat for mounting the catalyst support. See, for example, Japanese Unexamined Patent Publication No. 2002-514283 (page 2, pages 16-18). Namely, in this Patent Publication, a single sheet formed from a flexible expanding layer and a flexible expanding layer containing an expanding material is arranged between a metal housing and a catalyst support.

### Summary of the Invention

In recent years however, due to the requirements for improved automobile fuel consumption and increasingly strict emissions controls, the catalytic devices used in automobiles are being exposed to even higher temperatures due to higher temperatures of the exhaust gas itself from the engine, and due to the use of a system in which exhaust gas is treated at as high a temperature as possible by locating the catalytic device immediately behind the engine in order to improve purification performance. For example, it is known to be not uncommon for the temperature of exhaust gas to exceed 1000°C under certain driving conditions in vehicles using a gasoline engine.

However, expanding materials such as the vermiculite, expanding graphite or expanding sodium silicate and so forth used in Japanese Unexamined Patent Publication No. 2002-514283 deteriorate when exposed to temperatures of 800-1000°C, and under a significant decrease in strength. In addition to the thermal deterioration, a mechanical shock such as decreases the holding strength of the catalyst support. In this Patent Publication, although the use of an expanding material is able to effectively accommodate changes in the gap between the metal housing and catalyst support, there is no discussion of the durability at high temperatures in excess of 800°C.

According to the present invention, a mat for mounting a pollution control element, like a catalyst support, can be provided that maintains support holding strength without impairing elasticity even when exposed to temperatures in excess of 800°C for long periods of time.

In order to solve one or more of the above problems, the present invention can provide a mat for mounting a pollution control element (e.g., a catalyst support, diesel particulate filter, etc.), and the pollution control device containing such a mat, where the mat comprises at least two layers, an alumina fiber layer and a ceramic fiber layer. These layers can be provided in the form a single sheet without the use of an auxiliary bonding means.

### Brief Description of the Drawings

Fig. 1 is an exploded perspective view of a catalytic purification device.
Fig. 2 is a cross-sectional view showing the constitution of a mat for mounting a catalyst support of the present invention.
Fig. 3 is a graph showing the changes over time in the bearing pressure of the mat for mounting a catalyst support of Sample 3.
Fig. 4 is a graph showing the extrapolated values of bearing pressure after 10 years of samples of Examples 1 and 2 and Comparative Example 1.

### Detailed Description

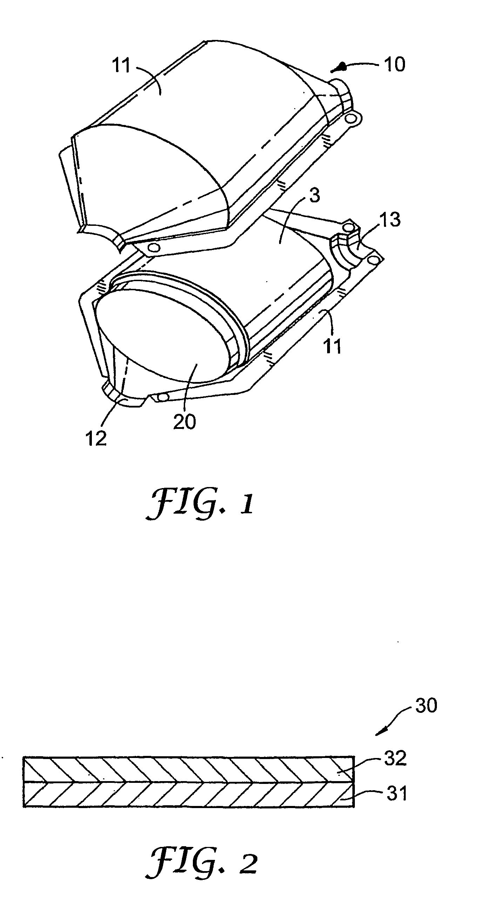

The following provides an explanation of the present invention with reference to the drawings. Fig. 1 is an exploded perspective view of a typical catalytic converter. Catalytic converter 10 contains catalyst support 20, composed of a monolith having a so-called "honeycomb structure" in which through holes are arranged in the shape of honeycombs, in a metal housing 11. This monolith is loaded with a catalyst that purifies exhaust gas by oxidizing carbon dioxide and hydrocarbons and reducing nitrogen oxides. Catalyst support 20 is normally formed from a ceramic material, and is frequently extremely brittle. Consequently, a mat 3 for mounting a catalyst support is arranged between metal housing 11 and catalyst support 20 to protect catalyst support 20 from damage.

As shown in Fig. 2, mat 30 for mounting a catalyst support of the present invention contains at least two layers consisting of an alumina fiber layer 31 and a ceramic fiber layer 32, and these layers form a single sheet without the use of an auxiliary bonding means.

Alumina fiber layer 31 is formed from alumina fibers prepared by a precursor fibering process and ceramic fiber layer 32 is formed from ceramic fibers prepared by melting a mixture of alumina (Al₂O₃), silica (SiO₂) and other oxides followed by melt blowing or melt spanning. These fibers are formed from 80-95 wt% of fibers and 5-20 wt% of binder.

Here, in the present specification, the alumina fibers that compose alumina fiber layer 31 are crystalline fibers that contain 50 wt% or more, and preferably 70 wt% or more, of alumina. On the other hand, the ceramic fibers that compose ceramic fiber layer 32 are RCF (Refractory Ceramic Fiber) that contain 45 wt% or more of silica. Examples of other oxides besides alumina and silica include zirconia (ZrO₂), magnesia (MgO), calcia (CaO), chromium oxide (Cr₂O₃), yttrium oxide (Y₂O₃) and lanthanum oxide (La₂O₃).

The ceramic fibers that compose ceramic fiber layer 32 are preferably annealed. Annealing improved elasticity and improves the holding strength and durability of the mat. This annealing is carried out at a temperature of 700-1200°C, and preferably 950-1100°C, and the annealing time is preferably 0.5-2 hours.

Acrylic resin, styrene-butadiene, vinyl pyridine, acrylonitrile, vinyl chloride or polyurethane and so forth is used for the binder. In addition, an inorganic binder (e.g., glass particles, calcium carbonate, mica or magnesium hydroxide) or flexible thermosetting resin (e.g., unsaturated polyester, epoxy resin or polyvinyl ester) may also be contained in addition to the alumina fibers or ceramic fibers and binder.

The mat for mounting a catalyst support of the present invention is formed by forming a single sheet without the use of an auxiliary bonding means, such as by simultaneously forming a ceramic fiber layer on the upper surface of an alumina fiber layer. This "auxiliary bonding means" refers to an externally used adhesive means such as resin, adhesive, adhesive tape, stitches or staples.

Mats for mounting a catalyst support of the prior art that are composed of a multi-layered laminate were formed by first individually forming each layer followed by mutually adhering the layers using adhesive, adhesive film, stitches or staples. However, multi-layered mats in which the individual layers were adhered with adhesive or adhesive film may typically produce undesirable smoke or odor when used in a catalytic converter. In addition, this adhesive or adhesive film has an effect on the heat resistance of the mat. Moreover, the production costs of such a mat increase due to the cost of mutually adhering each layer as well as the cost of the adhesive or adhesive film used. On the other hand, in the case of mats in which the layers were adhered mechanically with stitches and so forth, the mechanical strength of the mat decreases at those sites where the stitches penetrate the mat, and there are problems with costs of the additional steps and materials required.

The present invention eliminates the above problems since a single sheet is formed from an alumina fiber layer and ceramic fiber layer without the use of such auxiliary bonding means.

More specifically, the mat for mounting a catalyst support of the present invention is formed by preparing a slurry containing alumina fibers and a slurry containing ceramic fibers (the solid portion of these slurries are preferably 5 wt% or less), adhering the first slurry to a screen or wire and so forth of a rolling machine, forming a lower layer by partially dehydrating this first slurry by gravity and/or vacuum, adhering the second slurry to the above partially dehydrated lower layer, forming an upper layer by similarly partially dehydrating, and then pressing using a pressing roller to increase the densities of both layers followed by drying completely with a heated roller. Although either the alumina fiber layer or ceramic fiber layer may be initially formed as the lower layer, it is preferable during drying that the thickest layer be the lower layer that is formed first.

In this manner, due to the step of adhering a second slurry onto a layer formed by partially dehydrating a first slurry followed by dehydration of the second slurry, the both components are partially mixed particularly at the interface between the two layers. As a result, the two layers are permanently and effectively adhered without the use of an auxiliary bonding means such as an adhesive, allowing the formation of an integrated sheet.

In the mat for mounting a catalyst support of the present invention, the weight ratio between the alumina fiber layer and the ceramic fiber layer is preferably 3:11-11:3. In addition to the two-layer structure composed of these alumina fiber and ceramic fiber layers, the mat for mounting a catalyst support of the present invention may employ a structure of three or more layers that include other layers composed of these materials or other materials. In this case, however, at least one of the outermost layers must be an alumina fiber layer.

As shown in Fig. 1, a catalytic purification device can be completed by wrapping the mat for mounting a catalyst support obtained in this manner around a catalyst support to that an alumina fiber layer is in contact with the catalyst support, and then containing it in a metal housing.

### Examples

### Example 1

92 wt% of alumina fibers, composed of 72 wt% of alumina and 28 wt% of silica, were mixed with 8 wt% of binder (acrylic latex, Nippon Zeon: Nippore LX-816) followed by the addition of water to prepare a first slurry. In addition, 92 wt% of silica fibers (Shinnikka Thermal Ceramics: SC-1260D1), formed by melting and composed of 46 wt% of alumina and 53 wt% of silica, were mixed with 8 wt% of the above binder followed by the addition of water to prepare a second slurry. Samples 1 through 5 of mats for mounting a catalyst support having the weighing capacity ratios between the alumina fiber layer and ceramic fiber layer shown in Table 1 were obtained by the above ordinary rolling method using these slurries.

### Example 2

With the exception of using ceramic fibers that were annealed for 60 minutes at a temperature of 1000°C, samples 6 through 8 of mats for mounting a catalyst support shown in Table 2 were obtained in the same manner as Example 1.

### Comparative Example 1

With the exception of forming the ceramic fiber layer from 41 wt% of vermiculite, 47 wt% of ceramic fibers and 12 wt% of binder, samples 9 through 13 of mats for mounting a catalyst support shown in Table 3 were obtained in the same manner as Example 1.

### Evaluation Method

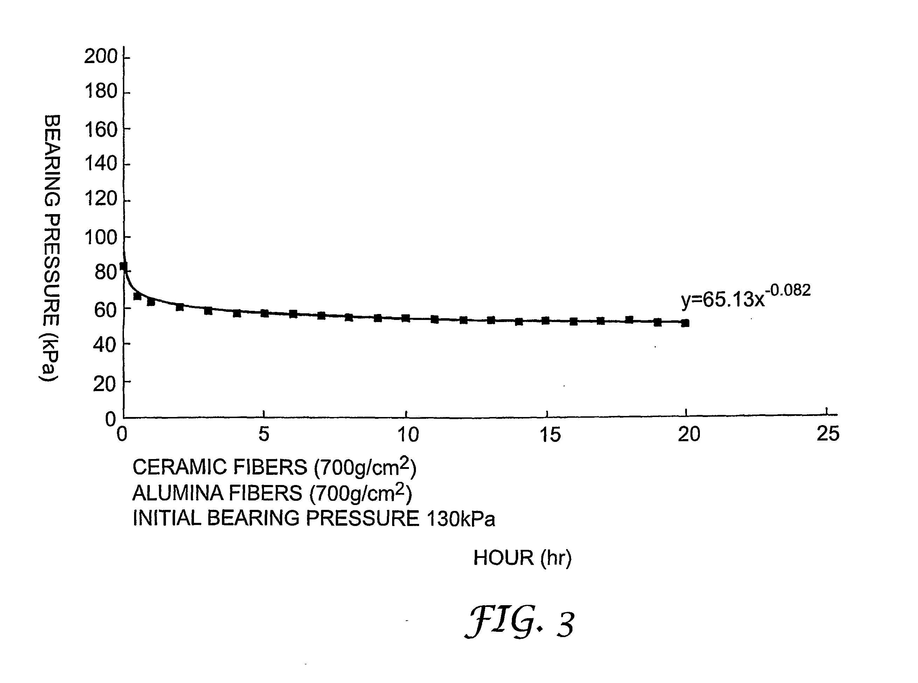

The high-temperature holding strength (bearing pressure) and durability of the samples were evaluated in the manner described below. Namely, each sample was cut to a diameter of 45 mm, and each cut sample was then clamped between two plates above and below of a compression tester so that the alumina fiber layer was on the high-temperature (900°C) side. The samples were compressed and the pressure was adjusted to 130 kPa after 5 minutes. Next, the two upper and lower plates were heated and the times when the plates reached 900°C and 700°C, respectively, were taken to be time 0. The changes in bearing pressure were then recorded every hour for 20 hours. The results for sample 3 are shown in Fig. 3. The formula Y=aX**^{b}** can be determined from this graph as an approximation of changes in bearing pressure. Bearing pressure extrapolated values were then determined using this approximation formula, and are shown in Tables 1 through 3.

**Table 1**

| | | 1st layer | 2nd layer | Approx. formula for changes in bearing pressure | Bearing pressure extrapolated value after 10 years (kPa) |
|---|---|---|---|---|---|
| | | Ceramic fibers (92%), binder (8%) | Alumina fibers (92%), binder (8%) | | |
| Sample 1 | Weighing capacity (g/m2) | 300 | 1100 | Y=85. 933X^{-0.0566} | 45.1 |
| | Weighing capacity ratio | 3 | 11 | | |
| Sample 2 | Weighing capacity (g/m2) | 500 | 900 | Y=68. 21X^{-0.0589} | 34.9 |
| | Weighing capacity ratio | 5 | 9 | | |
| Sample 3 | Weighing capacity (g/m2) | 700 | 700 | Y=65. 13X^{-0.082} | 25.6 |
| | Weighing capacity ratio | 7 | 7 | | |
| Sample 4 | Weighing capacity (g/m2) | 900 | 500 | Y=48. 132X^{-0.0724} | 21.1 |
| | Weighing capacity ratio | 9 | 5 | | |
| Sample 5 | Weighing capacity (g/m2) | 1100 | 300 | Y=43. 803X^{-0.1343} | 9.5 |
| | Weighing capacity ratio | 11 | 3 | | |

**Table 2**

| | | 1st layer | 2nd layer | Approx. formula for changes in bearing pressure | Bearing pressure extrapolated value after 10 years (kPa) |
|---|---|---|---|---|---|
| | | Ceramic fibers (92%), binder (8%) | Alumina fibers (92%), binder (8%) | | |
| Sample 6 | Weighing capacity (g/m2) | 300 | 1100 | Y=103. 57X^{-0.0493} | 59.1 |
| | Weighing capacity ratio | 3 | 11 | | |
| Sample 7 | Weighing capacity (g/m2) | 700 | 700 | Y=94. 206X^{-0.0446} | 55.5 |
| | Weighing capacity ratio | 7 | 7 | | |
| Sample 8 | Weighing capacity (g/m2) | 1100 | 300 | Y=90. 317X^{-0.0538} | 49 |
| | Weighing capacity ratio | 7 | 7 | | |

**Table 3**

| | | 1st layer | 2nd layer | Approx. formula for changes in bearing pressure | Bearing pressure extrapolated value after 10 years (kPa) |
|---|---|---|---|---|---|
| | | Vermiculite (41%), ceramic fibers (47%), binder (12%) | Alumina fibers (92%), binder (8%) | | |
| Sample 9 | Weighing capacity (glm2) | 300 | 1100 | Y=150. 42X^{-0.1143} | 41 |
| | Weighing capacity ratio | 3 | 11 | | |
| Sample 10 | Weighing capacity (g/m2) | 500 | 900 | Y=196. 79X^{-0.1574} | 32.8 |
| | Weighing capacity ratio | 5 | 9 | | |
| Sample 11 | Weighing capacity (g/m2) | 700 | 700 | Y=234. 08X^{-0.2256} | 18 |
| | Weighing capacity ratio | 7 | 7 | | |
| Sample 12 | Weighing capacity (g/m2) | 900 | 500 | Y=311. 91X^{-0.2828} | 12.5 |
| | Weighing capacity ratio | 9 | 5 | | |
| Sample 13 | Weighing capacity (g/m2) | 1100 | 300 | Y=344. 19X^{-0.4101} | 3.24 |
| | Weighing capacity ratio | 11 | 3 | | |

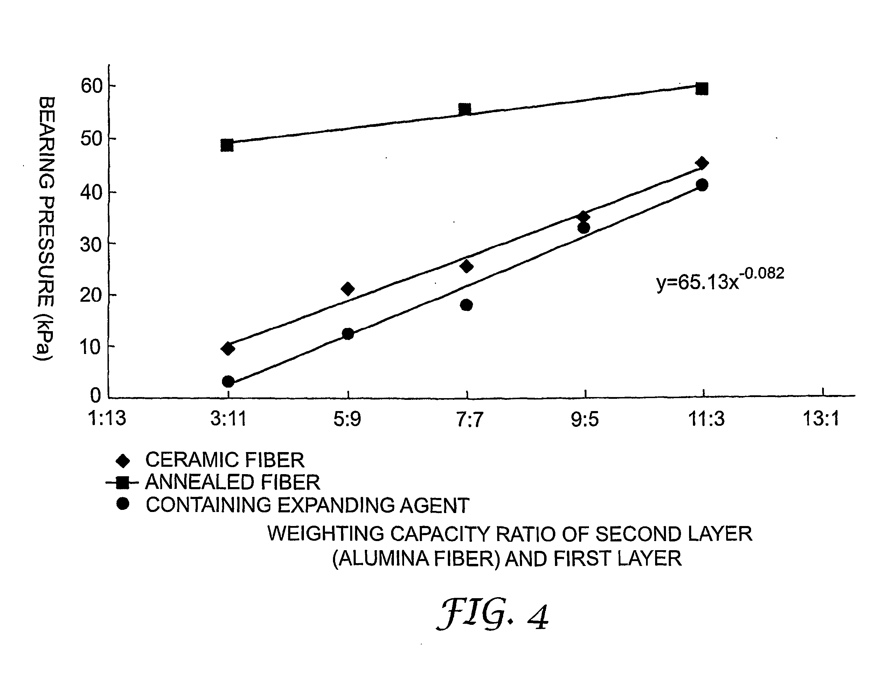

A graph containing a plot of extrapolated bearing pressure values after ten years is shown in Fig. 4. As is clear from Fig. 4, the high-temperature holding strength after 10 years of the mat for mounting a catalyst support of the present invention is improved by about 40% over a mat containing an expanding agent of the prior art at alumina fiber layer to ceramic fiber layer ratios of 7:7-3:1. Moreover, when annealed ceramic fibers are used, high-temperature holding strength after 10 years was improved by about 4-5 times at an alumina fiber layer to ceramic fiber layer ratio of 3:11, and by about two times at an alumina fiber layer to ceramic fiber layer ratio of 7:7.

The mat for mounting a catalyst support of the present invention maintains support holding strength without impairing elasticity even if exposed to high temperatures in excess of 800°C for long periods of time.

## Claims

1. A mat for mounting a pollution control element in a pollution control device comprising at least two layers consisting of an alumina fiber layer and ceramic fiber layer, wherein the weight ratio of said alumina fiber layer to said ceramic fiber layer is 3:11-11:3 and said mat maintains holding strength even when exposed to high temperatures in excess of 800°C for long periods of time,
wherein neither said layer includes an expanding material, the alumina fiber layer contains crystalline alumina fibers formed from a mixture containing alumina and silica, and the alumina content of that fiber is 50 wt% or more, and the ceramic fiber layer contains ceramic fibers formed from a mixture containing alumina and silica, and the silica content of that fiber is 45 wt% or more.

2. The pollution control device according to claim 1, wherein said alumina fiber layer and said ceramic fiber layer form a single sheet without the use of an auxiliary bonding means.

3. The mat according to claim 1 or 2, wherein the ceramic fibers that compose the ceramic fiber layer are annealed at a temperature of 700-1200°C.

4. The mat according to claim 1 or 2, wherein the alumina fiber layer and ceramic fiber layer are formed into a single sheet by preparing a slurry containing alumina fibers and a slurry containing ceramic fibers, adhering either of the slurries to a permeable substrate and partially dehydrating the adhered slurry to form a first layer, and then adhering the other slurry to the first layer and partially dehydrating that slurry to form a second layer.

5. The mat according to any one of claims 1 to 4, wherein said mat is for mounting a catalyst support in a catalytic converter.

6. The mat according to any one of claims 1 to 5, wherein said mat maintains its holding strength even when exposed to high temperatures in excess of 800°C for 10 years as determined by extrapolation.

7. A pollution control device comprising:
a housing;
a pollution control element mounted in said housing; and
a mat according to any one of claims 1 to 6 disposed between said housing and said pollution control element so as to mount said pollution control element in said housing.

8. The pollution control device according to claim 7, wherein said pollution control device is a catalytic converter and said pollution control element is a catalyst support.

9. The pollution control device according to claim 7, wherein said pollution control device is a diesel particulate filter and said pollution control element is a filter.

10. An automobile comprising a pollution control device according to any one of claims 7 to 9

11. A diesel engine comprising a pollution control device according to any one of claims 7 to 9

12. An exhaust gas purification device comprising a pollution control device according to any one of claims 7 to 9.

13. An automobile comprising the exhaust gas purification device of claim 12.

14. A diesel engine comprising the exhaust gas purification device of claim 12.

## Patentansprüche

1. Matte zum Befestigen eines Schadstoffkontrollelementes in einer Schadstoffkontrollvorrichtung, aufweisend mindestens zwei Schichten, bestehend aus einer Aluminiumoxidfaserschicht und einer Keramikfaserschicht, wobei das Gewichtsverhältnis der Aluminiumoxidfaserschicht zu der Keramikfaserschicht 3:11-11:3 ist und die Matte ihre Haltefestigkeit behält, selbst wenn sie für längere Zeiträume hohen Temperaturen von mehr als 800 °C ausgesetzt wird,
wobei keine der Schichten ein sich ausdehnendes Material aufweist, die Aluminiumoxidfaserschicht kristalline Aluminiumoxidfasern enthält, die aus einer Mischung, die Aluminiumoxid und Silica enthält, gebildet sind, und der Aluminiumoxidgehalt dieser Faser 50 Gew.-% oder mehr beträgt, und die Keramikfaserschicht Keramikfasern enthält, die aus einer Mischung, die Aluminiumoxid und Silica enthält, gebildet sind, und der Silicagehalt dieser Faser 45 Gew.-% oder mehr beträgt.

2. Schadstoffkontrollvorrichtung nach Anspruch 1, wobei die Aluminiumoxidfaserschicht und die Keramikfaserschicht einen einzelnen Bogen bilden, ohne die Verwendung eines zusätzlichen Haftmittels.

3. Matte nach Anspruch 1 oder 2, wobei die Keramikfasern, die die Keramikfaserschicht bilden, bei einer Temperatur von 700-1200 °C geglüht werden.

4. Matte nach Anspruch 1 oder 2, wobei die Aluminiumoxidfaserschicht und die Keramikfaserschicht in einen einzelnen Bogen gebildet werden, indem ein Schlamm, welcher Aluminiumoxidfasern enthält, und ein Schlamm, der Keramikfasern enthält, hergestellt wird, einer der Schlämme an ein permeables Substrat angehaftet und der angehaftete Schlamm teilweise dehydriert wird, um eine erste Schicht zu bilden, und dann der andere Schlamm an die erste Schicht angehaftet und dieser Schlamm teilweise dehydriert wird, um eine zweite Schicht zu bilden.

5. Matte nach einem der Ansprüche 1 bis 4, wobei die Matte zum Befestigen eines Katalysatorträgers in einem Katalysator dient.

6. Matte nach einem der Ansprüche 1 bis 5, wobei die Matte ihre Haltefestigkeit behält, selbst wenn sie für 10 Jahre hohen Temperaturen von mehr als 800 °C ausgesetzt wird, wie durch Extrapolation bestimmt.

7. Schadstoffkontrollvorrichtung, aufweisend:
ein Gehäuse;
ein in dem Gehäuse befestigtes Schadstoffkontrollelement; und
eine Matte nach einem der Ansprüche 1 bis 6, die zwischen dem Gehäuse und dem Schadstoffkontrollelement angeordnet ist, um das Schadstoffkontrollelement in dem Gehäuse zu befestigen.

8. Schadstoffkontrollvorrichtung nach Anspruch 7, wobei die Schadstoffkontrollvorrichtung ein Katalysator ist, und das Schadstoffkontrollelement ein Katalysatorträger ist.

9. Schadstoffkontrollvorrichtung nach Anspruch 7, wobei die Schadstoffkontrollvorrichtung ein Diesel-Partikelfilter ist, und das Schadstoffkontrollelement ein Filter ist.

10. Auto mit einer Schadstoffkontrollvorrichtung nach einem der Ansprüche 7 bis 9.

11. Dieselmotor mit einer Schadstoffkontrollvorrichtung nach einem der Ansprüche 7 bis 9.

12. Abgasreinigungsvorrichtung mit einer Schadstoffkontrollvorrichtung nach einem der Ansprüche 7 bis 9.

13. Auto mit einer Abgasreinigungsvorrichtung nach Anspruch 12.

14. Dieselmotor mit einer Abgasreinigungsvorrichtung nach Anspruch 12.

## Revendications

1. Nappe pour monter un élément de contrôle de la pollution dans un dispositif de contrôle de la pollution comprenant au moins deux couches consistant en une couche de fibres d'alumine et une couche de fibres céramiques, dans laquelle le rapport pondéral entre ladite couche de fibres d'alumine et ladite couche de fibres céramiques est de 3 : 11 - 11 : 3, ladite nappe conservant une force de maintien même si elle est exposée à des températures élevées dépassant 800°C sur de longues durées,
dans laquelle aucune desdites couches ne comprend de matériau expansible, la couche de fibres d'alumine contient des fibres d'alumine cristalline formées à partir d'un mélange contenant de l'alumine et de la silice, et la teneur en alumine de ces fibres est de 50 % en poids ou plus, et la couche de fibres céramiques contient des fibres céramiques formées à partir d'un mélange contenant de l'alumine et de la silice, et la teneur en silice de ces fibres est de 45 % en poids ou plus.

2. Dispositif de contrôle de la pollution selon la revendication 1, dans lequel ladite couche de fibres d'alumine et ladite couche de fibres céramiques forment une feuille unique sans utiliser de moyen de collage auxiliaire.

3. Nappe selon la revendication 1 ou 2, dans laquelle les fibres céramiques qui composent la couche de fibres céramiques sont recuites à une température de 700-1200°C.

4. Nappe selon la revendication 1 ou 2, dans laquelle la couche de fibres d'alumine et la couche de fibres céramiques sont façonnées en une feuille unique en préparant une bouillie contenant des fibres d'alumine et une bouillie contenant des fibres céramiques, en collant l'une ou l'autre des bouillies à un substrat perméable et en déshydratant partiellement la bouillie collée pour former une première couche, puis en collant l'autre bouillie à la première couche et en déshydratant partiellement cette bouillie pour former une deuxième couche.

5. Nappe selon l'une quelconque des revendications 1 à 4, ladite nappe étant destinée au montage d'un support de catalyseur dans un pot catalytique.

6. Nappe selon l'une quelconque des revendications 1 à 5, ladite nappe conservant sa force de maintien même si elle est exposée à des températures élevées dépassant 800°C pendant 10 ans, comme déterminé par extrapolation.

7. Dispositif de contrôle de la pollution comprenant :
un boîtier ;
un élément de contrôle de la pollution monté dans ledit boîtier ; et
une nappe selon l'une quelconque des revendications 1 à 6 disposée entre ledit boîtier et ledit élément de contrôle de la pollution de manière à monter ledit élément de contrôle de la pollution dans ledit boîtier.

8. Dispositif de contrôle de la pollution selon la revendication 7, ledit dispositif de contrôle de la pollution étant un pot catalytique et ledit élément de contrôle de la pollution étant un support de catalyseur.

9. Dispositif de contrôle de la pollution selon la revendication 7, ledit dispositif de contrôle de la pollution étant un filtre à particules diesel et ledit élément de contrôle de la pollution étant un filtre.

10. Automobile comprenant un dispositif de contrôle de la pollution selon l'une quelconque des revendications 7 à 9.

11. Moteur diesel comprenant un dispositif de contrôle de la pollution selon l'une quelconque des revendications 7 à 9.

12. Dispositif de purification des gaz d'échappement comprenant un dispositif de contrôle de la pollution selon l'une quelconque des revendications 7 à 9.

13. Automobile comprenant le dispositif de purification des gaz d'échappement selon la revendication 12.

14. Moteur diesel comprenant le dispositif de purification des gaz d'échappement selon la revendication 12.
